# EUROPEAN PATENT SPECIFICATION

(11) **EP 2 632 035 B1**
(45) Date of publication and mention of the grant of the patent: **07.08.2019**
(21) Application number: 11833887.0
(22) Date of filing: 17.10.2011
(51) Int. Cl.: H02K 3/52, H02K 5/22, H02K 11/33, H02K 29/00

(54) **DIRECT CURRENT ELECTRIC MOTOR WITHOUT EXTERNAL ROTOR BRUSHES**
GLEICHSTROMELEKTROMOTOR OHNE EXTERNE ROTORBÜRSTEN
MOTEUR ÉLECTRIQUE À COURANT CONTINU SANS BALAIS DE ROTOR EXTÉRIEUR

(30) Priority: 18.10.2010 ES 201001333
(43) Date of publication of application: 28.08.2013
(73) Proprietor: Soler & Palau Research, S.L., 08150 Parets del Vallés (Barcelona) (ES)
(72) Inventor: VAQUE CABAÑAS, Roser, 17500 Ripoll (Girona) (ES)
(74) Representative: Cabinet Plasseraud
(86) International application number: PCT/ES2011/000301
(87) International publication number: WO 2012/052577

(56) References cited:
- EP-A1- 1 737 109
- EP-A1- 1 737 109
- EP-A1- 2 043 234
- ES-T3- 2 332 360
- JP-A- 61 150 653
- US-A- 5 635 781
- US-A1- 2002 117 914
- US-A1- 2006 006 094
- US-A1- 2009 127 964
- US-A1- 2010 187 920
- US-B1- 6 483 213

## Description

### Field of the Art

The present invention relates to direct current electric motors, proposing a brushless-type direct current external-rotor electric motor, having constructive and functional features that are particularly advantageous for achieving the intended objective.

### State of the Art

Direct current electric motors are essentially comprised of two elements, a fixed element (stator) and another moving element (rotor), and their operation is based on the thrust derived from the repulsion and attraction between magnetic poles of both elements, such that by creating magnetic fields suitably oriented in stator and rotor, a torque is generated which forces the rotor to rotate continuously. The generated magnetic fields must be switched as the rotor rotates so that the attractive and repulsive forces always keep it in motion.

In the case of brushless direct current electric motors, the rotor is formed by permanent magnets, and a winding is arranged in the stator, which winding generates at all times the suitable magnetic field rotating the rotor when sequentially energized by an electronic control system.

The rotor can be arranged inside the stator (internal-rotor motor) or it can be formed like a casing, such that it surrounds the stator (external-rotor motor), thereby successfully generating a higher torque.

In turn, the electronic control system, must know the position of the generated magnetic field at all times, so Hall effect sensors are generally used to detect said position.

The application of brushless direct current motors today is quite extensive, said motors being assembled in various computer peripherals, in robotics, in variable speed units for heat pumps, fans, compressors, etc.

Brushless direct current external-rotor motors conventionally comprise a disc-shaped metal support structure on the sides of which the control electronics and the stator are arranged, such that metal pins that allow connecting the stator and the control electronics go through said metal support structure. Sensors for detecting the magnetic field also go through the metal support structure, said sensors being connected to the control electronics and they must be placed close to the rotor.

It is therefore necessary to assure suitable electrical insulation among the control electronics, the metal support structure and the stator windings, and it is necessary to achieve a certain degree of tightness between these components preventing the entrance of liquids or other foreign bodies.

In this sense, European patent EP 1560319 has an electronically commutated, i.e., brushless, direct current external-rotor motor comprising two protective elements arranged on both sides of a metal support structure.

These protective elements have openings for the passage of the connection elements of the stator windings. Said openings have raised ridges that allow the openings of both elements to be coupled to one another in a leak-tight manner, thus providing protection and insulation for the connection elements of the stator windings.

Additionally, one of the protective elements comprises housing recesses, support pins in which sensors are arranged for measuring the magnetic field go through said housing recesses; these housing recesses also are provided with raised ridges, as well as a corresponding opening in the other protective element, in which they are coupled in a leak-tight manner.

European patent EP 1361644 is also known, said patent discloses an electronically commutated direct current external-rotor electric motor having a protective element, arranged between a metal support structure and the stator, and having projecting conformations with openings where the connection pins of the stator windings are introduced. Said projecting conformations protect and insulate these connection pins, being coupled in a leak-tight manner with the corresponding recess conformations located in a casing of the control electronics, which is arranged on the other side of the metal structure.

The solutions known for protection and insulation in direct current motors therefore involve arranging protective and insulating elements that complicate the assembly of the motor and raise its final cost. Other examples of electric motors can be found for instance in US2006/006094A1, US2010/187920A1, EP1737109A1, US6483213B1 or EP2043234A1.

### Object of the Invention

The invention proposes a brushless direct current external-rotor electric motor having protective and insulating means that are simpler and more efficient than those known to date, thereby allowing a final cost reduction for the motor and simplifying the assembly thereof.

The motor object of the invention comprises a disc-shaped metal support structure which is integrated with a central tube on one of its sides which provides support for a stator on which an external rotor rotates. Control electronics connected to a printed circuit board, and a plate-like protective element insulating said control electronics from the metal support structure are arranged on the other face of the metal support structure.

The stator has a plurality of windings which are connected to the printed circuit board of the control electronics by means of a connector group comprising metal connection pins. These metal pins go through the metal support structure and the protective element through several openings.

Insulating elements preventing contact between the metal support structure and the metal connection pins and providing, together with the protective element, a leak-tight coupling between the stator and the control electronics are overmolded on the central portion of these metal pins.

Therefore, unlike conventional solutions, the obligation to incorporate projecting conformations in the openings of the protective element to successfully insulate the metal connection pins is prevented. Additionally, and unlike other known solutions, the motor object of the present invention does not comprise Hall effect sensors for measuring the magnetic fields, which allows dispensing with openings in the protective element and in the metal support structure for the passage of said sensors. The structure of the protective element and of the metal support structure is therefore simplified and the costs thereof are reduced.

Furthermore, the need to add a second protective element between the stator and the metal support structure is eliminated because the insulating elements that are overmolded on the metal connection pins provide the necessary protection and insulation between the stator and the metal support structure. Tasks for assembling the motor are therefore simplified, and costs resulting from said second protective element are avoided.

As a result, the solution object of the invention has truly advantageous features, acquiring its own identity and preferred character with respect to the known solutions.

### Description of the Drawings

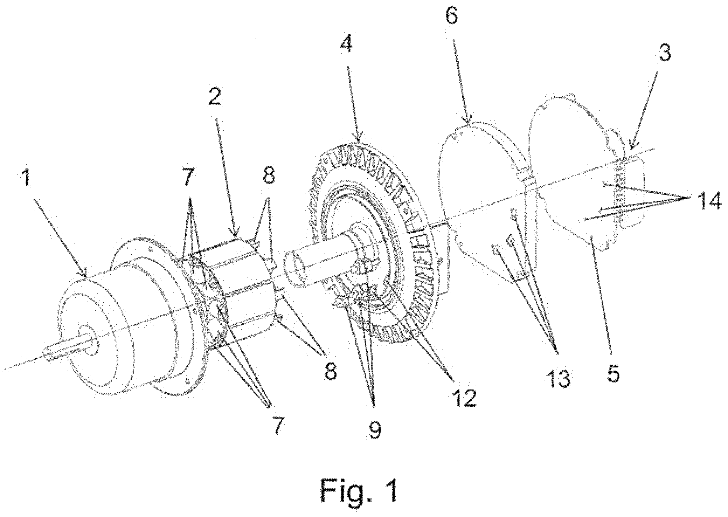

Figure 1 shows an exploded view of the motor object of the invention

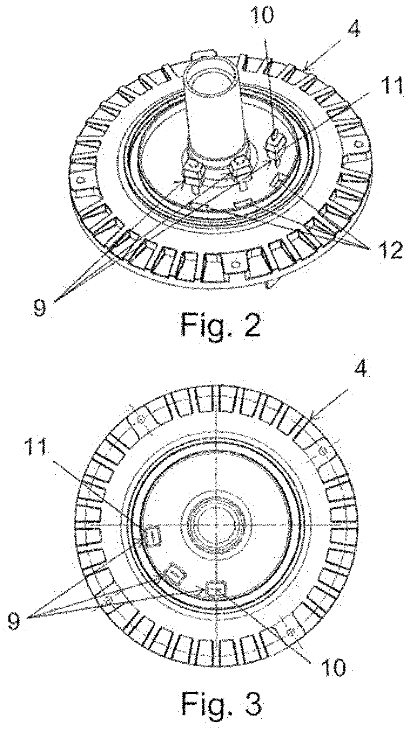

Figure 2 corresponds to a perspective view of the metal support structure and of an embodiment of the connector assembly formed by independent connectors, where the manner in which said connectors are introduced through the openings arranged in the metal support structure can be seen.
Figure 3 corresponds to a plan view of Figure 2.

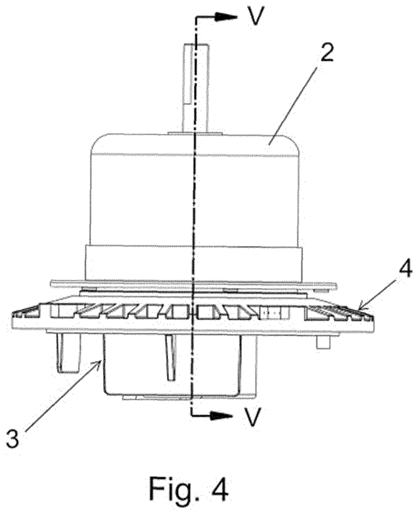

Figure 4 is an elevational view of the motor object of the invention.

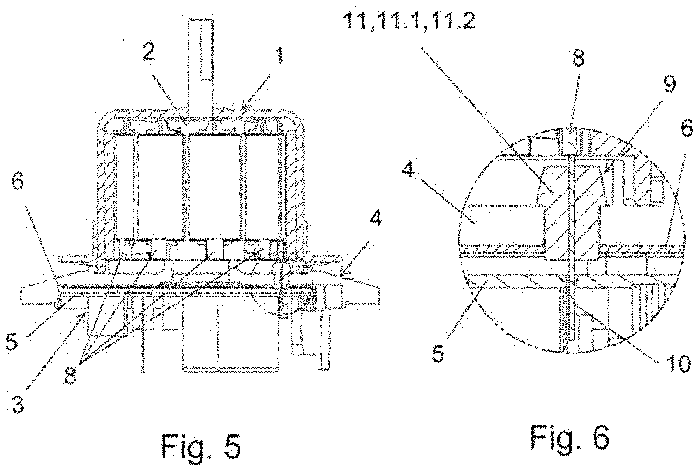

Figure 5 corresponds to a longitudinal section of Figure 4.
Figure 6 shows a detail of Figure 5 where the coupling of the connector assembly with the metal support structure and the protective element can be seen.
Figure 7 corresponds to a perspective view of one of the connectors forming the connector group of the embodiment included in Figure 2.
Figures 8 and 10 are elevational and plan views, respectively, of Figure 7.
Figure 9 shows a longitudinal section of Figure 8.
Figure 11 corresponds to a perspective view of an embodiment of the connector group.
Figure 12 is the elevational view with respect to Figure 13.
Figure 13 shows a view of the longitudinal section of Figure 12.

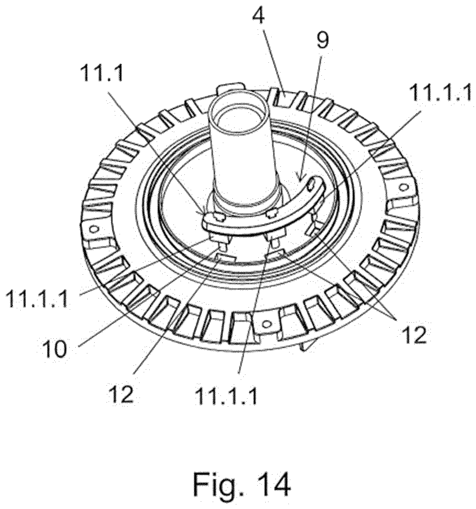

Figure 14 corresponds to a perspective view of the metal support structure and of the connector assembly of Figure 13, where the manner in which said connector group is coupled in the openings arranged in the metal support structure can be seen.

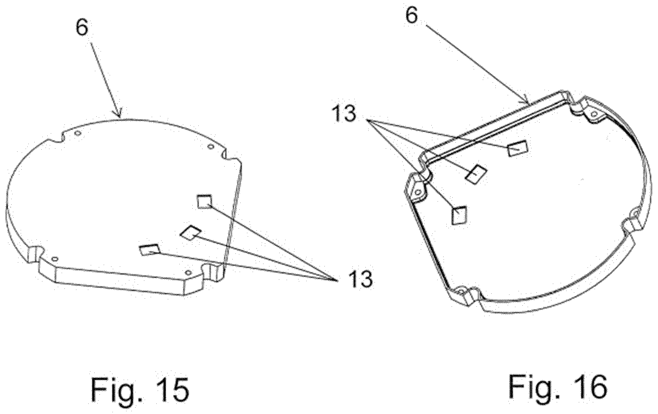

Figures 15 and 16 are top and bottom perspective views, respectively, of the protective element for the embodiments of the connector assembly of Figures 7 and 13.
Figure 17 corresponds to a perspective view of an embodiment of the connector group.
Figure 18 is the elevational view with respect to Figure 17.
Figure 19 shows a view of the longitudinal section of Figure 18.

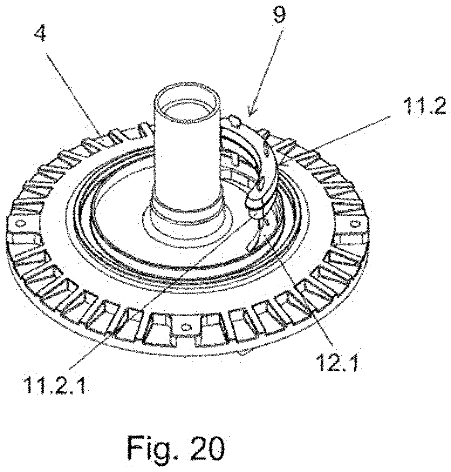

Figure 20 corresponds to a perspective view of the metal support structure and of the connector assembly of Figure 17 where the manner in which said connector group is coupled in the openings arranged in the metal support structure can be seen.

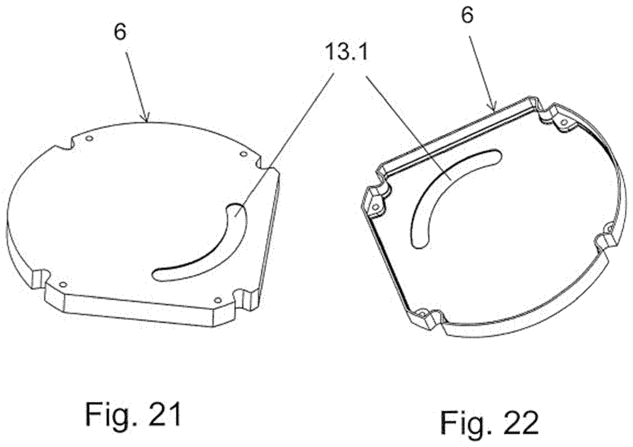

Figures 21 and 22 are top and bottom perspective views, respectively, of the protective element for the embodiment of the connector group of Figure 18.

### Detailed Description of the Invention

The brushless direct current external-rotor electric motor object of the invention, comprises four general elements: an external rotor (1) assembled such that it can rotate around a stationary stator (2), control electronics (3) integrated in a printed circuit board (5), and a metal support structure (4) on which the aforementioned elements are assembled.

The stator (2) is assembled on one of the faces of the disc-shaped metal support structure (4), with a central tube integrated on the face on which the stator (2) is assembled. A protective element (6) on which the printed circuit board (5) is arranged is coupled on the other face of the metal support structure (4).

Said protective element (6) is made of an insulating material and comprises perimetric ridges that allow complete coupling on the metal support structure (4), contributing to the complete insulation thereof from the printed circuit board (5). It also has several openings (13) which are aligned post-assembly with several openings (12) in the metal support structure (4).

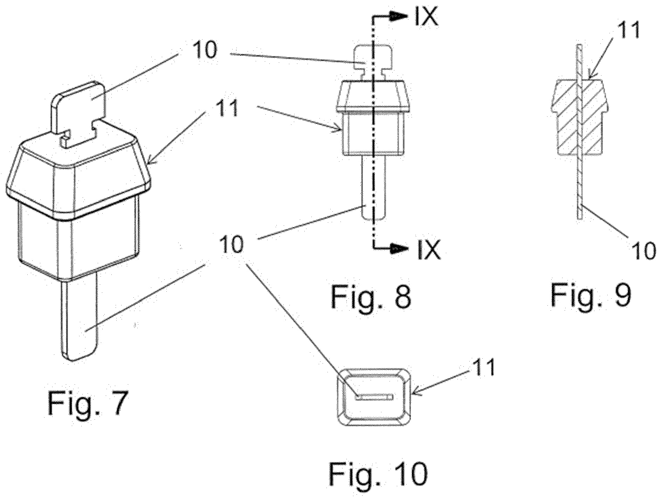

The stator (2) has a plurality of windings (7) provided with connection terminals (8). These windings (7) are electrically connected to the control electronics (3) by means of a connector group (9) that can comprise independent connectors, shown in Figure 7. These independent connectors are comprised of insulating elements (11) overmolded on metal pins (10), such that said metal pins (10) project from both sides of the insulating elements (11), thereby allowing the electrical connection between the connection terminals (8) and the printed circuit board (5), which for that purpose has housings, not shown in the drawings, in which the metal pins (10) are introduced through openings (14).

The insulating elements (11) go through the openings (12 and 13) of the metal support structure (4) and the protective element (6), respectively, such that said insulating elements (11) are embedded in the openings (12 and 13), insulating the metal pins (10) from the metal support structure (4), while at the same time sealing the openings (12 and 13).

Furthermore, the insulating elements (11) can be formed such that their upper portion has a larger perimeter than their lower portion, abutting with respect to the openings (12) of the metal support structure (4). The insulating element (11) therefore manages to maintain an optimal position at all times which facilitates a correct connection of the connection pins (10) with the connection terminals (8) and the printed circuit board (5).

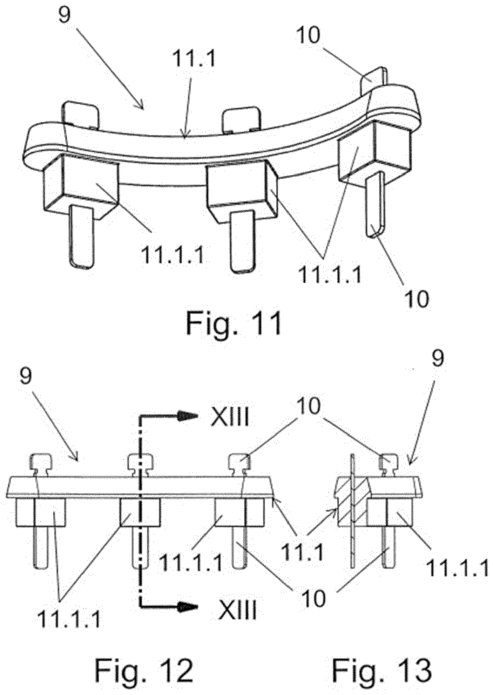

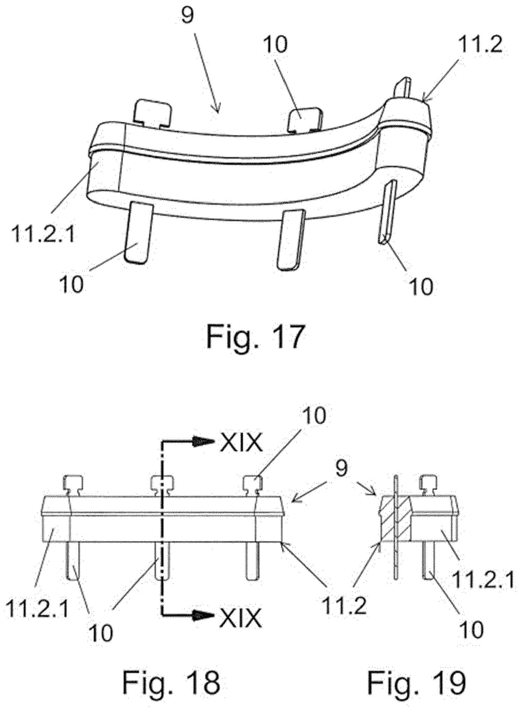

Figure 13 and Figure 17 show two other non-limiting embodiments of the connector group (9), in which the metal connection pins (10) are integrated in a single insulating element (11.1 and 11.2).

In the example shown in Figure 13, the insulating element (11.1) has independent conformations (11.1.1) for each metal connection pin (10) which are introduced in the openings (12 and 13), whereas the insulating element (11.2) of the example shown in Figure 17 has a single conformation (11.2.1), such that for this embodiment the metal support structure (4) and the protective element (6) have single openings (12.1 and 13.1), respectively, in which said conformation (11.2.1) is coupled in a leak-tight manner.

## Claims

1. A brushless direct current external-rotor electric motor, provided with a stator (2), a metal support structure (4), a protective element (6) and control electronics (3) connected to a printed circuit board (5),
comprises a connector group (9) for connecting the printed circuit board (5) and the stator (2) windings (7), formed by one or more insulating elements (11, 11.1 or 11.2) overmolded on the central portion of metal connection pins (10) ;
**characterized in that** the insulating elements (11, 11.1 or 11.2) go through the metal support structure (4) and the protective element (6).

2. The brushless direct current external-rotor electric motor according to claim 1, wherein the connector group (9) comprises three insulating elements (11), each of which is independently overmolded on one of the metal connection pins (10) forming independent connectors.

3. The brushless direct current external-rotor electric motor according to claim 1, wherein the connector group (9) comprises a single insulating element (11.1) having a body, overmolded jointly on several metal connection pins (10), having independent conformations (11.1.1) for each of the metal connection pins (10); these conformations (11.1.1) form a single part with the body of the insulating element (11.1)

4. The brushless direct current external-rotor electric motor according to claim 1, wherein the connector group (9) comprises a single insulating element (11.2) having a body, overmolded jointly on several metal connection pins (10) having a single conformation (11.2.1) that forms a single part with the body of the insulating element (11.2)

5. The brushless direct current external-rotor electric motor according to claim 1, wherein the protective element (6) is arranged between the metal support structure (4) and the printed circuit board (5) and has several openings (13).

6. The brushless direct current external-rotor electric motor according to claim 1, wherein the protective element (6) is arranged between the metal support structure (4) and the printed circuit board (5) and has a single opening (13.1).

7. The brushless direct current external-rotor electric motor according to claim 1, wherein the metal support structure (4) has several openings (12).

8. The brushless direct current external-rotor electric motor according to claim 1, wherein the metal support structure (4) has a single opening (12.1).

9. The brushless direct current external-rotor electric motor according to claims 1, 2, 5 and 7, when the connector group (9) is comprised of several independent connectors, the insulating elements (11) go through the metal support structure (4) through the openings (12) and they go through the protective element (6) through the openings (13), the insulating elements (11) being coupled in said openings (12 and 13) in a leak-tight manner.

10. The brushless direct current external-rotor electric motor according to claims 1, 3, 5 and 7, when the connector group (9) comprises a single insulating element (11.1) with several independent conformations (11.1.1), these conformations (11.1.1) go through the metal support structure (4) through the openings (12) and they go through the protective element (6) through the openings (13), the insulating element (11.1) being coupled in said openings (12 and 13) in a leak-tight manner.

11. The brushless direct current external-rotor electric motor according to claims 1, 4, 6 and 8, when the connector group (9) comprises a single insulating element (11.2) with a single conformation (11.2.1), this conformation (11.2.1) goes through the metal support structure (4) through the opening (12.1) and it goes through the protective element (6) through the opening (13.1), the insulating element (11.2) being coupled in said openings (12.1 and 13.1) in a leak-tight manner.

12. The brushless direct current external-rotor electric motor according to claims 1 and 3, wherein the conformations (11.1.1) of the insulating element (11.1) are comprised of inserts integral with the body of the insulating element (11.1).

13. The brushless direct current external-rotor electric motor according to claims 1 and 4, wherein the conformation (11.2.1) of the insulating element (11.2) is comprised of an insert integral with the body of the insulating element (11.2).

## Patentansprüche

1. Bürstenloser Gleichstrom-Außenrotor-Elektromotor, der mit einem Stator (2), einer metallischen Trägerstruktur (4), einem Schutzelement (6) und einer mit einer gedruckten Schaltkarte (5) verbundenen Steuerelektronik (3) versehen ist und eine Verbindergruppe (9) zum Verbinden der gedruckten Steuerkarte (5) und Wicklungen (7) des Stators (2) aufweist und welche durch ein oder mehrere isolierende Elemente (11, 11.1 oder 11.2) gebildet ist, die an dem zentralen Abschnitt metallischer Verbindungsstifte (10) überformt sind;
**dadurch gekennzeichnet, dass** die isolierenden Elemente (11, 11.1 oder 11.2) sich durch die metallische Trägerstruktur (4) und das Schutzelement (6) hindurch erstrecken.

2. Bürstenloser Gleichstrom-Außenrotor-Elektromotor nach Anspruch 1, wobei die Verbindergruppe (9) drei isolierende Elemente (11) aufweist, von denen jedes unabhängig an einem der metallischen Verbindungsstifte (10) überformt ist, die unabhängige Verbinder bilden.

3. Bürstenloser Gleichstrom-Außenrotor-Elektromotor nach Anspruch 1, wobei die Verbindergruppe (9) ein einziges isolierendes Element (11.1) aufweist, das einen an mehreren metallischen Verbindungsstiften (10) zusammenhängend überformten Körper und unabhängige Konformationen (11.1.1) für jeden der metallischen Verbindungsstifte (10) hat; diese unabhängigen Konformationen (11.1.1) bilden ein einzelnes Teil mit dem Körper des isolierenden Elements (11.1).

4. Bürstenloser Gleichstrom-Außenrotor-Elektromotor nach Anspruch 1, wobei die Verbindergruppe (9) ein einziges isolierendes Element (11.2) aufweist, das einen an mehreren metallischen Verbindungsstiften (10) zusammenhängend überformten Körper und eine einzige Konformation (11.2.1) hat, die mit dem Körper des isolierenden Elements (11.2) ein einzelnes Teil bildet.

5. Bürstenloser Gleichstrom-Außenrotor-Elektromotor nach Anspruch 1, wobei das Schutzelement (6) zwischen der metallischen Trägerstruktur (4) und der gedruckten Schaltkarte (5) angeordnet ist und mehrere Öffnungen (13) hat.

6. Bürstenloser Gleichstrom-Außenrotor-Elektromotor nach Anspruch 1, wobei das Schutzelement (6) zwischen der metallischen Trägerstruktur (4) und der gedruckten Schaltkarte (5) angeordnet ist und einzige Öffnung (13.1) hat.

7. Bürstenloser Gleichstrom-Außenrotor-Elektromotor nach Anspruch 1, wobei die metallische Trägerstruktur (4) mehrere Öffnungen (12) hat.

8. Bürstenloser Gleichstrom-Außenrotor-Elektromotor nach Anspruch 1, wobei die metallische Trägerstruktur (4) eine einzige Öffnung (12.1) hat.

9. Bürstenloser Gleichstrom-Außenrotor-Elektromotor nach Anspruch 1, 2, 5 und 7, wobei, wenn die Verbindergruppe (9) aus mehreren unabhängigen Verbindern besteht, die isolierenden Elemente (11) durch die Öffnungen (12) durch die metallische Trägerstruktur (4) hindurchgehen und durch die Öffnungen (13) durch das Schutzelement (6) hindurchgehen, wobei die isolierenden Elemente (11) leckdicht in den Öffnungen (12 und 13) gekoppelt sind.

10. Bürstenloser Gleichstrom-Außenrotor-Elektromotor nach Anspruch 1, 3, 5 und 7, wobei, wenn die Verbindergruppe (9) ein einziges isolierendes Element (11.1) mit mehreren unabhängigen Konformationen (11.1.1) aufweist, diese Konformationen (11.1.1) durch die Öffnungen (12) durch die metallische Trägerstruktur (4) hindurchgehen und durch die Öffnungen (13) durch das Schutzelement (6) hindurchgehen, wobei das isolierenden Element (11.1) leckdicht in den Öffnungen (12 und 13) gekoppelt ist.

11. Bürstenloser Gleichstrom-Außenrotor-Elektromotor nach Anspruch 1, 4, 6 und 8, wobei, wenn die Verbindergruppe (9) ein einziges isolierendes Element (11.2) mit einer einzigen Konformation (11.2.1) aufweist, diese Konformation (11.2.1) durch die Öffnung (12.1) durch die metallische Trägerstruktur (4) hindurchgeht und durch die Öffnung (13.1) durch das Schutzelement (6) hindurchgeht, wobei das isolierenden Element (11.2) leckdicht in den Öffnungen (12.1 und 13.1) gekoppelt ist.

12. Bürstenloser Gleichstrom-Außenrotor-Elektromotor nach Anspruch 1 und 3, wobei die Konformationen (11.1.1) des isolierenden Elements (11.1) aus Einsätzen bestehen, die integral mit dem Körper des isolierenden Elements (11.1) sind.

13. Bürstenloser Gleichstrom-Außenrotor-Elektromotor nach Anspruch 1 und 4, wobei die Konformation (11.2.1) des isolierenden Elements (11.2) aus einem Einsatz besteht, der integral mit dem Körper des isolierenden Elements (11.2) ist.

## Revendications

1. Moteur électrique à courant continu de rotor externe sans balais, pourvu d'un stator (2), d'une structure de support métallique (4), d'un élément de protection (6) et d'électronique de commande (3) connectée à une carte de circuit imprimé (5), comprend un groupe connecteur (9) pour connecter la carte de circuit imprimé (5) et des bobinages (7) de stator (2), formés par un ou plusieurs éléments isolants (11, 11.1 ou 11.2) surmoulés sur la portion centrale de broches de connexion métalliques (10) ; **caractérisé en ce que** les éléments isolants (11, 11.1 ou 11.2) passent à travers la structure de support métallique (4) et l'élément de protection (6).

2. Moteur électrique à courant continu de rotor externe sans balais selon la revendication 1, dans lequel le groupe connecteur (9) comprend trois éléments isolants (11), chacun d'eux est indépendamment surmoulé sur l'une des broches de connexion métalliques (10) formant des connecteurs indépendants.

3. Moteur électrique à courant continu de rotor externe sans balais selon la revendication 1, dans lequel le groupe connecteur (9) comprend un seul élément isolant (11.1) ayant un corps, surmoulé conjointement sur plusieurs broches de connexion métalliques (10), ayant des conformations indépendantes (11.1.1) pour chacune des broches de connexion métalliques (10) ; ces conformations (11.1.1) forment une seule partie avec le corps de l'élément isolant (11.1).

4. Moteur électrique à courant continu de rotor externe sans balais selon la revendication 1, dans lequel le groupe connecteur (9) comprend un seul élément isolant (11.2) ayant un corps, surmoulé conjointement sur plusieurs broches de connexion métalliques (10) ayant une seule conformation (11.2.1) qui forme une seule partie avec le corps de l'élément isolant (11.2).

5. Moteur électrique à courant continu de rotor externe sans balais selon la revendication 1, dans lequel l'élément de protection (6) est agencé entre la structure de support métallique (4) et la carte de circuit imprimé (5) et comporte plusieurs ouvertures (13).

6. Moteur électrique à courant continu de rotor externe sans balais selon la revendication 1, dans lequel l'élément de protection (6) est agencé entre la structure de support métallique (4) et la carte de circuit imprimé (5) et comporte une seule ouverture (13.1).

7. Moteur électrique à courant continu de rotor externe sans balais selon la revendication 1, dans lequel la structure de support métallique (4) comporte plusieurs ouvertures (12).

8. Moteur électrique à courant continu de rotor externe sans balais selon la revendication 1, dans lequel la structure de support métallique (4) comporte une seule ouverture (12.1).

9. Moteur électrique à courant continu de rotor externe sans balais selon les revendications 1, 2, 5 et 7, quand le groupe connecteur (9) est composé de plusieurs connecteurs indépendants, les éléments isolants (11) passent à travers la structure de support métallique (4) à travers les ouvertures (12) et ils passent à travers l'élément de protection (6) à travers les ouvertures (13), les éléments isolants (11) étant couplés dans lesdites ouvertures (12 et 13) d'une manière étanche aux fuites.

10. Moteur électrique à courant continu de rotor externe sans balais selon les revendications 1, 3, 5 et 7, quand le groupe connecteur (9) comprend un seul élément isolant (11.1) avec plusieurs conformations indépendantes (11.1.1), ces conformations (11.1.1) passent à travers la structure de support métallique (4) à travers les ouvertures (12) et elles passent à travers l'élément de protection (6) à travers les ouvertures (13), l'élément isolant (11.1) étant couplé dans lesdites ouvertures (12 et 13) d'une manière étanche aux fuites.

11. Moteur électrique à courant continu de rotor externe sans balais selon les revendications 1, 4, 6 et 8, quand le groupe connecteur (9) comprend un seul élément isolant (11.2) avec une seule conformation (11.2.1), cette conformation (11.2.1) passe à travers la structure de support métallique (4) à travers l'ouverture (12.1) et elle passe à travers l'élément de protection (6) à travers l'ouverture (13.1), l'élément isolant (11.2) étant couplé dans lesdites ouvertures (12.1 et 13.1) d'une manière étanche aux fuites.

12. Moteur électrique à courant continu de rotor externe sans balais selon les revendications 1 et 3, dans lequel les conformations (11.1.1) de l'élément isolant (11.1) sont composées d'inserts d'un seul tenant avec le corps de l'élément isolant (11.1).

13. Moteur électrique à courant continu de rotor externe sans balais selon les revendications 1 et 4, dans lequel la conformation (11.2.1) de l'élément isolant (11.2) est composée d'un insert d'un seul tenant avec le corps de l'élément isolant (11.2).
